(19) Europäisches Patentamt

European Patent Office

Office européen des brevets

(11) Veröffentlichungsnummer : **0 443 098 A1**

# (12) EUROPÄISCHE PATENTANMELDUNG

(21) Anmeldenummer : 90121261.3

(22) Anmeldetag : 07.11.90

(51) Int. Cl.⁵ : **F16C 29/06**

(30) Priorität : 22.02.90 DE 4005582

(43) Veröffentlichungstag der Anmeldung :
28.08.91 Patentblatt 91/35

(84) Benannte Vertragsstaaten :
CH DE DK ES FR GB IT LI NL

(71) Anmelder : NEFF GMBH
Bonholzstrasse 17
W-7035 Waldenbuch (DE)

(72) Erfinder : Hauser, Karl-Heinz
Klingenbachstrasse 3
W-7049 Steinenbronn (DE)

(74) Vertreter : Rüger, Rudolf, Dr.-Ing. et al
Webergasse 3 Postfach 348
W-7300 Esslingen/Neckar (DE)

(54) Linearlager und Herstellungsverfahren für dessen Kugelumleitungseinrichtungen.

(57) Bei einem Linearlager mit einem auf einer Führungsschiene über Kugelreihen längsverschieblich geführten Linearschlitten sind an dem Linearschlitten aus Kunststoff bestehende Kugelumleitungsteile (14), die zumindest die Kugelumleitungskanäle (15) enthalten oder teilweise begrenzen, derart angeformt, daß sich ein stufenloser Übergang zwischen den Kugelumleitungskanälen (15) und den anschließenden Kugellaufbahnen (8) ergibt.

EP 0 443 098 A1

Fig. 2

## LINEARLAGER UND HERSTELLUNGSVERFAHREN FÜR DESSEN KUGELUMLEITUNGSEINRICHTUNGEN

Die Erfindung betrifft ein Linearlager mit einem auf einer Führungsschiene über Kugelreihen längsverschieblich geführten Linearschlitten, der den Kugelreihen zugeordnete Kugellaufbahnen sowie daran anschließende, stirnseitig angeordnete Kugelumleitungseinrichtungen aufweist, die mit an dem Linearschlitten vorgesehenen Kugelrückführungsbahnen in Verbindung stehende Kugelumleitungskanäle enthalten, wobei die Kugelumleitungskanäle und die Kugelrückführbahnen zumindest teilweise durch an dem Linearschlitten angeordnete Kunststoffteile begrenzt sind.

Außerdem bezieht sich die Erfindung auf ein Verfahren zur Herstellung zumindest der Kugelumleitungseinrichtungen an dem Linearschlitten eines solchen Linearlagers.

Beispielsweise aus der EP-A1-0268011 ist eine Linearlageranordnung bekannt, von der die Erfindung ausgeht und bei der auf einer eine längsverlaufende wannenartige Vertiefung aufweisenden Führungsschiene über zwei Kugelreihen ein Linearschlitten längsverschieblich geführt ist, der ein der Form der wannenartigen Vertiefung angepaßtes und in diese ragendes Lagerteil aufweist, an dem zwei den Kugelreihen zugeordnete Kugellaufbahnen angeordnet sind, denen entsprechende Kugellaufbahnen im Bereiche der Seitenwände der wannenartigen Vertiefung der Führungsschiene zugeordnet sind. Stirnseitig sind an dem Linearschlitten Kugelumleitungseinrichtungen angeordnet, die mit an dem Schlitten vorgesehenen Kugelrückführungsbahnen in Verbindung stehen. Diese Kugelumleitungseinrichtungen weisen aus Kunststoff hergestellte schalenförmige Kugelumleitelemente auf, die mittels angeformter Befestigungszapfen lagerichtig fixiert gemeinsam mit entsprechenden schalenförmigen Endteilen einer im wesentlichen C-förmigen Abdeckkappe die Kugelumleitungskanäle begrenzen. Die den Linearschlitten übergreifende Abdeckkappe hält nicht nur die stirnseitig angeordneten Kugelumleitelemente an dem Linearschlitten, sondern sie ist gleichzeitig derart ausgebildet, daß sie in dem Boden einer wannenartigen Vertiefung des Linearschlittens ausgebildete, im Querschnitt etwa teilkreisförmige Nuten überdeckt und damit mit diesen die Kugelrückführkanäle begrenzt.

Die bei einer Längsverschiebung des Linearschlittens fortlaufend aus dem Zwischenraum zwischen den Kugellaufbahnen des Linearschlittens und der Führungsschiene austretenden Kugeln jeder Kugelreihe werden von dem anschließenden Kugelumleitungskanal der jeweiligen Kugelumleitungseinrichtung aufgenommen und in diesen zu dem Kugelrückführungskanal geleitet.

Grundsätzlich ist es bei Linearlagern bekannt, daß schon verhältnismäßig geringe Unregelmäßigkeiten bei der Kugelumleitung zu einer erheblichen Geräuschentwicklung führen und die Ursache von unerwünschten Verschleißerscheinungen in dem Kugelumleitungsbereich sein können. Andererseits lassen sich aber schon aus Kostengründen bei der Herstellung des Linearschlittens und der auf diesen stirnseitig aufgesetzten Kugelumleitungsteile bestimmte Herstellungstoleranzen nicht vermeiden. Es muß deshalb in der Praxis bei der Montage des Linearschlittens insbesondere in dem Übergangsbereich zwischen der schlittenfesten Kugellaufbahn und dem jeweils anschließenden Kugelumleitungskanal eine Nachbearbeitung durch Schleifen etc. vorgenommen werden, um unerwünschtz Stufen oder andere Unregeimäßigkeiten in diesem Bereich zu beseitigen. Eine solche Nachbearbeitung ist teuer und aufwendig.

Aufgabe der Erfindung ist es deshalb, hier abzuhelfen und einen Weg zu weisen, der es gestattet, auf einfache, kostengünstige Weise ein Linearlager zu schaffen, das sich durch eine geringe Geräuschentwicklung und geringen Verschleiß in den Kugelumleitungsbereichen auszeichnet.

Zur Lösung dieser Aufgabe ist das eingangs genannte Linearlager erfindungsgemäß dadurch gekennzeichnet, daß zumindest die Kugelumleitungskanäle enthaltende oder solche teilweise begrenzende, aus Kunststoff bestehende Kugelumleitungsteile unter Ausbildung eines stufenlosen Übergangs zwischen den Kugelumleitungskanälen und den anschließenden Kugellaufbahnen an den Linearschlitten angeformt sind.

Dazu kann in einer bevorzugten Ausführungsform die Anordnung derart getroffen sein, daß zwischen den auf gegenüberliegenden Stirnseiten des Linearschlittens angeformten Kugelumleitungsteilen wenigstens ein zumindest teilweise Kugelrückführungskanäle begrenzendes, aus Kunststoff bestehendes Kugelrückführteil angeordnet ist, dessen Kugelrückführungskanäle sich übergangslos an die Kugelumleitungskanäle anschließend ausgebildet sind. Die Kugelumleitungsteile und das Kugelrückführungsteil sind zweckmäßigerweise einstückig miteinander verbundene Teile eines an den Linearschlitten angeformten Kunststoffelementes, doch sind grundsätzlich auch Ausführungsformen denkbar, bei denen lediglich die Kugelumleitungsteile selbst an den Linearschlitten angeformt sind.

Um die Montage des Linearschlittens zu erleichtern, ist es von Vorteil, wenn in dem Kugelrückführungsteil oder in wenigstens einem der Kugelumleitungsteile zumindest eine in einen jeweils zugeordneten Kugelrückführungs- oder -umleitungskanal mündende Kugeleinfüllöffnung ausgebildet ist. Diese Kugeleinfüllöffnung kann nach dem Einfüllen der Kugeln durch ein entsprechendes Verschlußteil verschlossen werden, wobei das Verschlußteil auch lösbar ausgebildet sein kann, um somit eine einfache Demontage des Linearschlittens zu ermöglichen.

Das die Kugelumleitungselemente und das Kugelrückführelement umfassende Kunststoffelement kann zweckmäßigerweise den Linearschlitten außen teilweise umgreifend im wesentlichen-C-förmig ausgebildet sein. Auch kann es von Vorteil sein, wenn der Linearschlitten auf einer Seite eine wannenförmige Vertiefung aufweist, in der das Kugelrückführungsteil zumindest teilweise aufgenommen ist, so daß sich insoweit kein zusätzlicher Platzbedarf ergibt. Dabei können an dem Linearschlitten im Bereiche der wannenartigen Vertiefung Kugelrückführungsbahnen ausgebildet sein, durch die gemeinsam mit dem Kugelrückführungsteil die Kugelrückführungskanäle begrenzt sind.

Um sicherzustellen, daß auch bei erschwerten Betriebsbedingungen die angeformten Kunststoffteile fest und unverlierbar an dem Linearschlitten gehalten bleiben, kann es von Vorteil sein, wenn die Kugelumleitungsteile und/oder das Kugelrückführungsteil an dem Linearschlitten formschlüssig verankert sind bzw. ist. Dazu Kann der Linearschlitten entsprechende Hinterschneidungen(bspw. Gewinde, schräge Bohrungen etc.) oder vorspringende Verankerungselemente tragen, die beim Anformen der Kunststoffteile mit Kunststoff ausgefüllt oder in diesen eingebettet werden.

Für die einwandfreie Funktion eines Linearlagers ist es erforderlich, daß die Kugelreihen genau lagerichtig auf den zugeordneten Laufbahnen des Linearschlittens und der Führungsschiene laufen. Dies erfordert eine erhebliche Herstellungsgenauigkeit, insbesondere beim Linearschlitten. Um die Anforderungen an die Herstellungsgenauigkeit zu senken, ist es bekannt (EP-A1-0268 011), in dem Linearschlitten einen Längsschlitz vorzusehen, der einen elastisch verformbaren Bereich ergibt, so daß die beiden einander gegenüberliegenden Kugellaufbahnen durch Spreizmittel in Gestalt von in den Längsschlitz eingedrückten Kegelstiften geringfügig in ihrem Abstand verändert und damit eingestellt werden können. Da die Kugelumleitungsteile stirnseitig an den Linearschlitten angeformt sind, könnten sie bei der elastischen Verformung des Linearschlittens einer unerwünschten Spannungsbeanspruchung ausgesetzt werden. Dies läßt sich dadurch vermeiden, daß die den beiden Kugellaufbahnen des Linearschlittens zugeordneten Kugelumleitungsteile an den Stirnseiten des Linearschlittens jeweils entsprechend dessen Verformung mitbeweglich ausgebildet sind. Bei der erwähnten Ausführungsform, bei der der Linearschlitten anschließend an den elastisch verformbaren Bereich zumindest einen Längsschlitz aufweist, in den die Spreizmittel ragen, kann dies praktisch derart verwirklicht werden, daß die Kugelumleitungsteile ebenfalls mit zumindest einem entsprechenden durchgehenden Schlitz versehen sind.

In der Regel sind die an die Stirnseiten des Linearschlittens angeformten Kugelumleitungsteile derart ausgebildet, daß sie die Kugelumleitungskanäle vollständig umschließen, so daß sich diese nach Art von Röhren durch die Kugelumleitungsteile erstrecken. In besonderen Fällen sind aber auch Ausführungsformen denkbar, bei denen die Anordnung derart getroffen ist, daß zumindest auf die Kugelumleitungsteile ein die Kugelumleitungskanäle teilweise begrenzender Deckel aufgesetzt ist. Ähnliches gilt auch für das Kugelrückführungsteil.

Zur Herstellung zumindest der Kugelumleitungseinrichtungen an dem Linearschlitten des beschriebenen Linearlagers wird gemäß weiterer Erfindung derart vorgegangen, daß von der jeweiligen Kugellaufbahn ausgehend und auf dieser aufliegend an dem Linearschlitten zumindest ein der Gestalt und Formgebung eines anschließenden Kugelumleitungskanales entsprechender Formkern angeordnet wird, daß sodann eine den Linearschlitten zumindest teilweise aufnehmende, der Formgestaltung wenigstens des oder der jeweiligen Kugelumleitungsteile(s) entsprechend gestaltete Form unter Anformung dieser Teile an den Linearschlitten mit einem aushärtenden Kunststoff ausgegossen wird und daß nach dem Aushärten des Kunststoffes der oder die Formkern(e), insbes. durch thermische oder chemische Behandlung entfernt wird bzw. werden. Unter dem Begriff "Kunststoff" sind dabei auch sogenannte Gießmassen verstanden, wie sie in unterschiedlichen Zusammensetzungen bekannt sind, z.B. Kunststoff/Metall-, Kunststoff/Mineralfaser-Massen etc.

Jeder Formkern besteht mit Vorteil aus einem niederschmelzenden Material, das ausgeschmolzen, ausgebrannt oder herausgelöst wird und bspw. ein Metall sein kann.

In einer bevorzugten Ausführungsform wird ein die stirnseitig an dem Linearschlitten angeordneten Kugelumleitungsteile miteinander verbindendes Kugelrückführteil gleichzeitig mit angeformt, wobei für jede Kugellaufbahn des Linearschlittens ein einstückiger, im wesentlichen C- oder ovalförmig gebogener Formkern verwendet wird, der mit Teilen auf der Kugellaufbahn aufliegend angeordnet wird.

Im übrigen ist jeder der Formkerne zweckmäßigerweise ein vorzugsweise im wesentlichen zylindrischer, länglicher Körper, der entsprechend formgebend gebogen ist. Der Formkern kann im Querschnitt auch ein anderes Profil aufweisen, bspw. rechteckig oder quadratisch sein.

Bei dem neuen Linearlager ist durch das unmittelbare Anformen zumindest der Kugelumleitungsteile nicht nur eine verhältnismäßig einfache Herstellung gewährleistet, sondern es ist auch sichergestellt, daß in dem Übergangsbereich zwischen den Kugellaufbahnen des Linearschlittens und den Kugelumleitungskanälen der Kugelumleitungsteile ein absolut stufenloser Übergang vorhanden ist, und zwar ohne daß dazu bei der Montage ein Nacharbeiten (Schleifen) erforderlich wäre. Das Linearlager zeichnet sich deshalb durch weitgehende Geräuscharmut und niedrigen Verschleiß aus.

In der Zeichnung ist ein Ausführungsbeispiel des Gegenstandes der Erfindung dargestellt. Es zeigen:

Fig. 1 ein Linearlager gemäß der Erfindung, im Querschnitt,

Fig. 2 den Linearschlitten des Linearlagers nach Fig.1, in einer perspektivischen Darstellung, teilweise aufgeschnitten und in einem anderen Maßstab, und

Fig. 3 den Linearschlitten nach Fig. 2, im Zustand nach dem Aushärten des Kunststoffs und vor dem Ausschmelzen der Formkerne, in einer entsprechenden Darstellung.

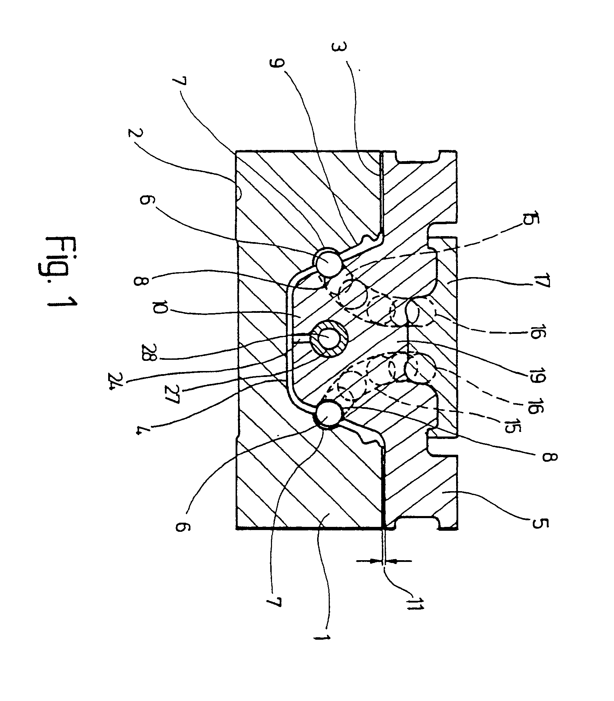

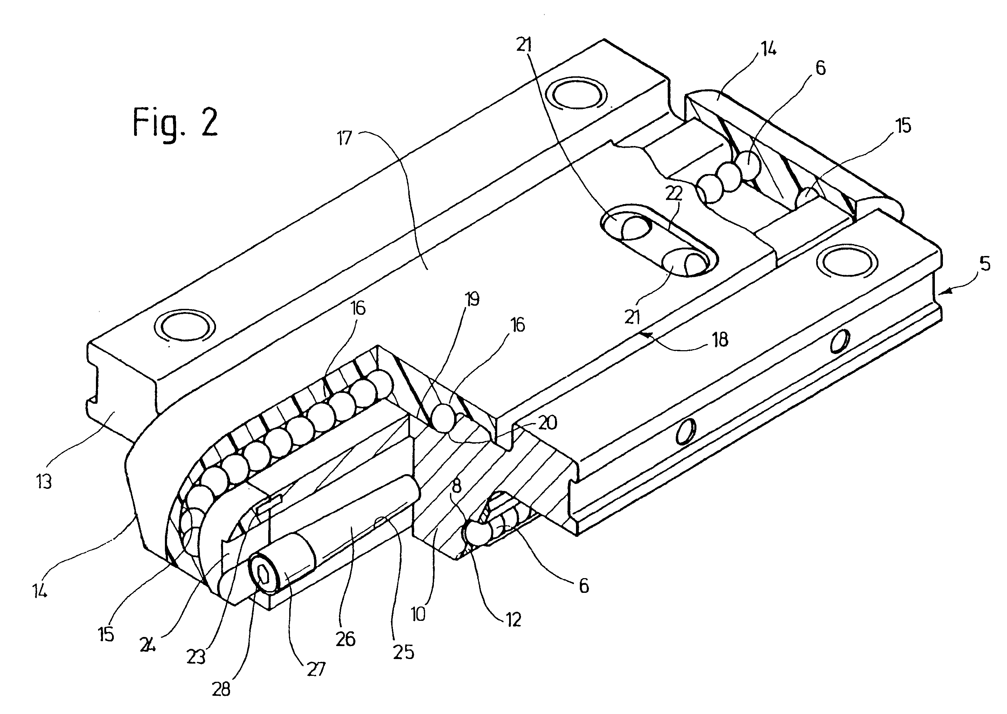

Das in Fig. 1 dargestellte Linearlager weist eine im Querschnitt im wesentlichen rechteckige Führungsschiene 1 auf, die mit einer ebenen Aufstellfläche 2 und einer dieser gegenüberliegenden parallelen oberen Fläche 3 ausgebildet ist, in deren Bereich sie mit einer in Längsrichtung durchgehenden wannenartigen Vertiefung 4 versehen ist. Auf der Führungsschiene 1 ist ein Linearschlitten 5 längsverschieblich geführt, der ebenso wie die Führungsschiene 1 aus Stahl besteht und auf dieser über zwei Kugelreihen 6 abgestützt ist. Die Kugeln der Kugelreihen 6 laufen auf jeweils einander zugeordneten Kugellaufbahnen 7, 8, die im Querschnitt etwa teilkreisförmig sind und von denen die Kugellaufbahnen 7 im Bereiche der gegenüberliegenden schrägen Seitenwände 9 der wannenartigen Vertiefung 4 der Laufschiene 1 und die Kugellaufbahnen 8 seitlich an einem in die wannenartige Vertiefung 4 ragenden und entsprechend gestalteten Lagerteil 10 des Linearschlittens 5 ausgebildet sind. Zwischen der Unterseite des Linearschlittens 1 und der Oberfläche 3 der Führungsschiene 1 ist ein bei 11 angedeuteter Spalt vorhanden, um die freie Beweglichkeit des Linearschlittens 5 zu gewährleisten. Die Kugellaufbahnen 7,8 sind gehärtet. An dem Lagerteil 1 des Linearschlittens 5 seitlich angebrachte Kugelkäfige 12 (Fig. 2) halten die Kugeln der Kugelreihen 6 unverlierbar an dem Lagerteil 10.

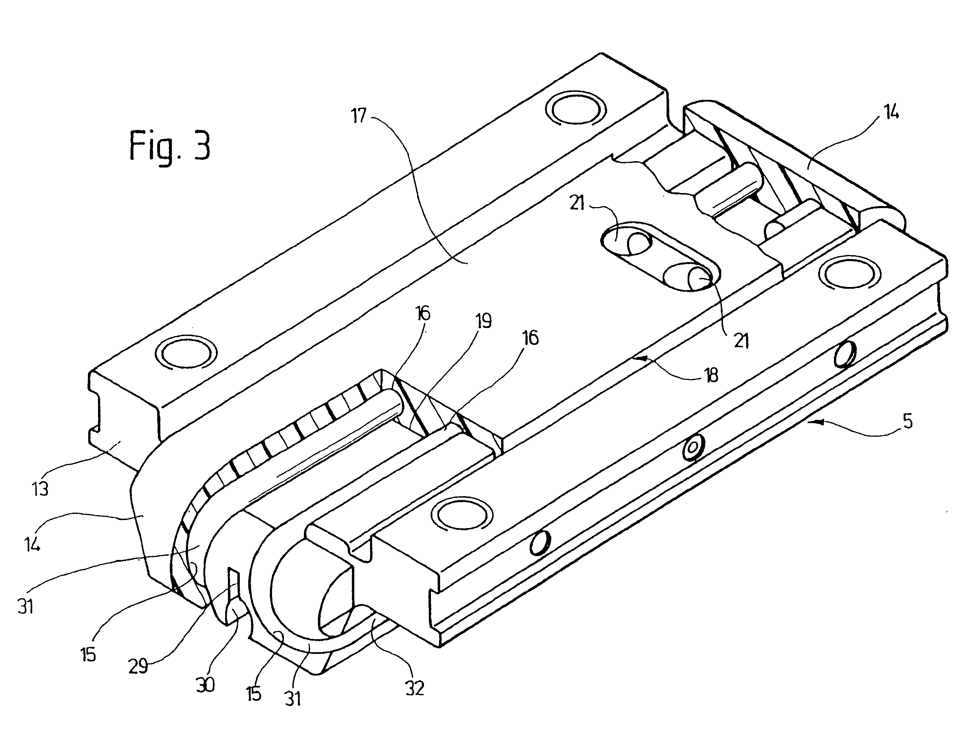

An den beiden Stirnflächen 13 des Linearschlittens 5 sind in der aus den Fig. 2 und 3 ersichtlichen Weise Kugelumleitungseinrichtungen angeordnet, die aus Kunststoff, bspw. Polyamid, bestehen und jeweils ein Kugelumleitungsteil 14 aufweisen, das unmittelbar an die zugeordnete Stirnfläche 13 des Linearschlittens 5 angeformt ist. Jedes der beiden im Querschnitt etwa teilkreisförmigen Kugelumleitungsteile 14 enthält zwei im Querschnitt zylindrische, etwa C-förmige Kugelumleitungskanäle 15, die sich an die beiden Kugellaufbahnen 8 absatzlos anschließen. Sie leiten die bei der Bewegung des Linearschlittens 5 aus dem Zwischenraum zwischen den beiden Kugellaufbahnen 7,8 austretenden kugeln der Kugelreihen 6 über einen bogenförmig gekrümmten Weg in Kugelrückführungskanäle 16, die parallel zueinander auf der Oberseite des Linearschlittens 5 verlaufen und sich zwischen den Kugelumleitungskanälen 15 der beiden Kugelumlenkungsteile 14 erstrecken. Die Kugelrückführungskanäle 16 sind in einem zwischen den beiden Kugelumleitungsteilen 14 angeordneten, ebenfalls aus Kunststoff bestehenden Kugelrückführungsteil 17 angeordnet; sie schließen sich übergangslos an die Kugelumleitungskanäle 15 an.

Fig. 2 zeigt, daß die Kugelumleitungsteile 14 und das Kugelrückführungsteil 17 einstückig miteinander verbundene Teile eines an den Linearschlitten 5 angeformten einheitlichen Kunststoffelementes 18 sind, das den Linearschlitten außen (in Längsrichtung) teilweise umgreifend im wesentlichen C-förmig ausgebildet ist und dessen Breite etwa der Breite des Lagerteiles 10 entspricht.

Auf seiner Oberseite ist der Linearschlitten 5 mit einer über seine Länge durchgehenden, symmetrisch angeordneten,wannenförmigen Vertiefung 19 ausgebildet, auf deren Boden Kugelrückführungsbahnen 20 angeordnet sind, durch die gemeinsam mit dem in der wannenförmigen Vertiefung 19 teilweise aufgenommenen Kugelrückführungsteil 17 die Kugelrückführungskanäle 16 begrenzt sind.

In dem Kunststoffelement 18 sind im Bereiche dessen Kugelrückführteiles 17 zwei Kugeleinfüllöffnungen 21 ausgebildet, die in die Kugelrückführungskanäle 16 münden und es erlauben, die Kugeln der beiden Kugelreihen 6 bei der Montage einzuführen. Ein in eine Ausnehmung 22 des Kugelrückführteiles 17 einsetzbarer, in Fig. 2 nicht weiter dargestellter Deckel erlaubt es, die beiden Kugeleinfüllöffnungen sodann gemeinsam zu verschließen.

Bei dem in den Figuren dargestellten Ausführungsbeispiel ist das Kunststoffelement 18 mit seinen Kugelumleitungsteilen 14 und dem Kugelrückführteil 17 im Spritzgußverfahren unmittelbar an den stählernen Lineärschlitten 5 angeformt und an diesem verankert, wobei die sich dabei ergebende Verbindung zwischen dem Kunststoff und dem Material des Linearschlittens 5 ausreicht, um das Kunststoffelement 18 sicher an dem Linearschlitten 5 zu halten. Um diese Verbindung zwischen dem Linearschlitten 5 und den Teilen des Kunststoffelementes 18 zu verbessern, kann es zweckmäßig sein, an dem Linearschlitten 5 Hinterschneidungen oder Vorsprünge oder allgemein eine Strukturierung vorzusehen, die eine formschlüssige Verankerung des Kunststoffs an dem Linearschlitten zumindest im Bereiche der Kugelumleitungsteile 14 ergibt. Ein Beispiel für ein solches formschlüssiges Verankerungselement ist ein bei 23 in Fig. 2 angedeuteter,stirnseitig angeordneter Zapfen. Infrage kämen zu diesem Zweck auch gegebenenfalls schräge Gewindebohrungen, so daß Zugspannungen übertragen werden können, etc.

Um die Kugellaufbahnen 8 des Linearschlittens 5 bezüglich der an der Führungsschiene 1 angeordneten Kugellaufbahnen 7 präzise einstellen zu können, ist in dem Lagerteil 10 des Linearschlittens 5 ein von dessen Unterseite ausgehender, symmetrisch angeordneter Längsschlitz 24 ausgebildet, der in dem darüberliegenden, sich bis zum Boden der wannenförmigen vertiefung 19 erstreckenden Teil des Linearschlittens 5 einen örtlich begrenzten, elastisch verformbaren Bereich bildet. In den Längsschlitz 24 ragen von beiden Enden her Kegelbohrungen 25 (Fig. 2), in die Kegelstifte 26 eingefügt sind, die als Spreizmittel dienen und über einen endseitig angeordneten Gewindekopf 27 axial verstellt werden können, wozu ein bei 28 angedeuteter Inbus-Schlüsselansatz dient. Durch Eindrehen der Kegelstifte 26 in deren kegelige Bohrungen 25 werden die beidseitig des Längsschlitzes 24 liegenden Abschnitte des Lagerteils 10 des Linearschlitzes 5 voneinander abgespreizt, so daß sich der Abstand der Kugellaufbahnen 8 in dem für die Einstellung erforderlichen geringen Maß verändert (bspw. bis zu 0,7 mm bei einem gebräuchlichen Ausführungsbeispiel).

Um zu verhindern, daß bei dieser Verformung des Lagerteils 10 die Verbindung zwischen dem Linearschlitten 5 und den stirnseitig angeformten Kugelumleitungsteilen 14 gelöst oder deren Kugelumleitungskanäle 15 gar seitlich gegen die Kugellaufbahnen 8 verschoben werden, so daß sich im Übergangsbereich eine Stufe ergibt, weisen die beiden Kugelumleitungsteile 14 jeweils einen mit dem Längsschlitz 24 fluchtenden Spreizschlitz 29 (Fig. 3) auf, der sich zu einer zylindrischen Bohrung 30 öffnet, die den Gewindekopf 27 des zugeordneten Kegelstiftes 26 aufnimmt. Beim Aufspreizen des Lagerteils 10 mittels der Kegelstifte 26 können sich damit die Kugelumleitungsteile 14 in dem an den Spreizschlitz 29 anschließenden geschwächten Bereich elastisch verformen und damit die Spreizbewegung mitmachen.

Die Herstellung der beschriebenen Kugelumleitungseinrichtungen an den Stirnseiten des Linearschlittens 5 sowie der Kugelrückführeinrichtungen, die alle in dem Kunststoffelement 18 vereinigt sind, geschieht unter Bezugnahme auf Fig. 3 in folgender Weise:

An dem stählernen Linearschlitten 5 werden zunächst zwei Formkerne 31 angebracht, die aus einem niedrigschmelzenden Material, insbesondere Metall, bestehen und eine längliche, im wesentlichen zylindrische Gestalt aufweisen. Jeder der Formkerne 31 ist im wesentlichen C- oder ovalförmig nach Art eines Kettengliedes gebogen und mit seinen Enden, bzw. mit Teilen auf die entsprechende Kugellaufbahn 8 aufgelegt, wie dies bei 32 veranschaulicht ist. Der Formkern 31 verläuft über die Oberseite des Linearschlittens 5, wobei er auf dem Grund der wannenförmigen Vertiefung 19 aufliegt.

Anschließend wird an den in eine entsprechende Form eingebrachten Linearschlitten 5 im Spritzgußverfahren das Kunststoffelement 18 unter Verwendung eines aushärtbaren Kunststoffs angespritzt, wobei die Formgebung dieses Kunststoffelementes 18 durch die entsprechende Gestaltung der Spritzgußform erzielt wird.

Nach dem Aushärten des Kunststoffs werden die Formkerne 31, deren Schmelzpunkt niedriger liegt als jener des Kunststoffmaterials, durch Ausschmelzen entfernt.

Damit ergibt sich ein absolut stufenfreier Übergang der Kugellaufbahn 8 und dem jeweils anschließenden Kugelrückführungskanal 15, der seinerseits übergangslos in den Kugelrückführungskanal 16 übergeht. Ein Nacharbeiten etwaiger Übergangsbereiche bei der Montage des Linearschlittens 15 ist nicht erforderlich.

Alternativ kann für die Formkerne 31 naturgemäß auch ein Material verwendet werden, das herausgebrannt oder durch chemische Einwirkung herausgelöst werden kann, worauf der Ordnung halber hingewiesen sei. Die Formkerne können auch bspw. als O-Ringe aus entsprechendem Kunststoffmaterial ausgebildet sein und nach dem Aufschneiden herausgezogen werden.

Bei dem beschriebenen Ausführungsbeispiel verlaufen die Kugelumleitungskanäle 15 vollständig durch die Kugelumleitungsteile 14, die ihrerseits einstückig ausgebildet sind. Es sind aber Ausführungsformen denkbar, bei denen die Kugelumleitungskanäle 15 zumindest in den Kugelumleitungsteilen 14 (aber gegebenenfalls auch in dem Kugelrückführungsteil 17) nur teilweise von dem an den Linearschlitten 5 angeformten Material begrenzt sind. Den vollständigen Abschluß dieser Kanäle übernimmt dann ein bspw. aufgeklipster Deckel.

Alternativ zu der dargestellten Ausführungsform können an jeder Stirnseite des Linearschlittens auch zwei Kugelumleitungsteile 14 angeordnet sein, die im Bereiche des Spreizschlitzes 24 ganz voneinander getrennt sind. Ebenso wäre es denkbar, daß das Kugelrückführungsteil 17 seinerseits deckelartig als getrenntes Teil zwischen die Kugelumleitungsteile 14 eingefügt und mit den Kugelumleitungsteilen 14 sowie mit dem Linearschlitten 5 in geeigneter Weise verbunden, bspw. verrastet ist.

## Patentansprüche

1.    Linearlager mit einem auf einer Führungsschiene über Kugelreihen längsverschieblich geführten Linearschlitten, der den Kugelreihen zugeordnete Kugellaufbahnen sowie daran anschließende, stirnseitig angeordnete Kugelumleitungseinrichtungen aufweist, die mit an dem Linearschlitten vorgesehenen Kugelrückführungsbahnen in Verbindung stehende Kugelumleitungskanäle enthalten, wobei die Kugelumleitungskanäle und die Kugelrückführbahnen zumindest teilweise durch an dem Linearschlitten angeordnete Kunststoffteile begrenzt sind, dadurch gekennzeichnet, daß zumindest die Kugelumleitungskanäle (15) enthaltende oder solche teilweise begrenzende, aus Kunststoff bestehende Kugelumleitungsteile (14) unter Ausbildung eines stufenlosen Überganges zwischen den Kugelumleitungskanälen (15) und den anschließenden Kugellaufbahnen (8) an dem Linearschlitten (5) angeformt sind.

2. Linearlager nach Anspruch 1, dadurch gekennzeichnet, daß zwischen den auf gegenüberliegenden Stirnseiten des Linearschlittens (5) angeformten Kugelumleitungsteilen (14) wenigstens ein zumindest teilweise Kugelrückführungskanäle (16) begrenzendes, aus Kunststoff bestehendes Kugelrückführteil (17) angeordnet ist, dessen Kugelrückführungskanäle (16) sich übergangslos an die Kugelumleitungskanäle (15) anschließend ausgebildet sind.

3. Linearlager nach Anspruch 2, dadurch gekennzeichnet, daß die Kugelumleitungsteile (14) und das Kugelrückführungsteil (17) einstückig miteinander verbundene Teile eines an den Linearschlitten (5) angeformten Kunststoffelementes (18) sind.

4. Linearlager nach Anspruch 2 oder 3, dadurch gekennzeichnet, daß in dem Kugelrückführungsteil (17) oder in wenigstens einem der Kugelumleitungsteile (14) zumindest eine in einem jeweils zugeordneten Kugelrückführungs- oder -umleitungskanal (16; 16) mündende Kugeleinfüllöffnung (21) ausgebildet ist.

5. Linearlager nach Anspruch 3 oder 4, dadurch gekennzeichnet, daß das Kunststoffelement (18) den Linearschlitten (5) außen teilweise umgreifend im wesentlichen C- oder ovalförmig ausgebildet ist.

6. Linearlager nach einem der Ansprüche 2 bis 5, dadurch gekennzeichnet, daß der Linearschlitten (5) auf einer Seite eine wannenförmige Vertiefung (19) aufweist, in der das Kugelrückführungsteil (17) zumindest teilweise aufgenommen ist.

7. Linearlager nach Anspruch 6, dadurch gekennzeichnet, daß an dem Linearschlitten (5) im Bereiche der wannenförmigen Vertiefung (19) Kugelrückführbahnen (20) ausgebildet sind, durch die gemeinsam mit dem Kugelrückführungsteil (17) die Kugelrückführungskanäle (16) begrenzt sind.

8. Linearlager nach einem der vorhergehenden Ansprüche, dadurch gekennzeichnet, daß die Kugelumleitungsteile (14) und/oder das Kugelrückführungsteil (17) an dem Linearschlitten (5) formschlüssig verankert sind bzw. ist.

9. Linearlager nach einem der vorhergehenden Ansprüche, dadurch gekennzeichnet, daß der Linearschlitten (5) einen zwischen zwei parallelen Kugellaufbahnen (8) verlaufenden, örtlich begrenzten, elastisch verformbaren Bereich aufweist, dem von außen her betätigbare Spreizmittel (26) zugeordnet sind, durch die die beiden Kugellaufbahnen (8) in ihrem Abstand einstellbar sind und daß die den beiden Kugellaufbahnen (8) zugeordneten Kugelumleitungsteile (14) an den Stirnseiten des Linearschlittens (5) jeweils entsprechend dessen Verformung mitbeweglich ausgebildet sind.

10. Linearlager nach Anspruch 9, dadurch gekennzeichnet, daß der Linearschlitten (5) anschließend an den elastisch verformbaren Bereich zumindest einen Längsschlitz (24) aufweist, in den die Spreizmittel (26) ragen und daß die Kugelumleitungsteile (14) ebenfalls mit zumindest einem entsprechenden durchgehenden Schlitz (29) versehen sind.

11. Linearlager nach einem der vorhergehenden Ansprüche, dadurch gekennzeichnet, daß zumindest auf die Kugelumleitungsteile (14) ein die Kugelumleitungskanäle (15) teilweise begrenzender Deckel aufgesetzt ist.

12. Verfahren zur Herstellung zumindest der Kugelumleitungseinrichtungen an dem Linearschlitten eines Linearlagers nach einem der vorhergehenden Ansprüche, dadurch gekennzeichnet, daß von der jeweiligen Kugellaufbahn ausgehend und auf dieser aufliegend an dem Linearschlitten zumindest ein der Gestalt und Formgebung eines anschließenden Kugelumleitungskanales entsprechender Formkern angeordnet wird, daß sodann eine den Linearschlitten zumindest teilweise aufnehmende, der Formgestaltung wenigstens des oder der jeweiligen Kugelumleitungsteile(s) entsprechend gestaltete Form unter Anformung dieser Teile an dem Linearschlitten mit einem aushärtenden Kunststoff ausgegossen wird und daß nach dem Aushärten des Kunststoffes der oder die Formkern(e), insbes. durch thermische oder chemische Behandlung, entfernt wird bzw. werden.

13. Verfahren nach Anspruch 12, dadurch gekennzeichnet, daß jeder Formkern aus einem niederschmelzenden Material besteht und ausgeschmolzen oder ausgebrannt wird.

14. Verfahren nach Anspruch 13, dadurch gekennzeichnet, daß das Material ein Metall ist.

15. Verfahren nach einem der Ansprüche 12 bis 14, dadurch gekennzeichnet, daß ein die stirnseitig an dem Linearschlitten angeordneten Kugelumleitungsteile miteinander verbindendes Kugelrückführteil an dem Linearschlitten gleichzeitig mit angeformt wird und daß für jede Kugellaufbahn des Linearschlittens ein einstückiger, im wesentlichen C- oder ovalförmig gebogener Formkern verwendet wird, der mit Teilen auf der Kugellaufbahn aufliegend angeordnet wird.

16. Verfahren nach einem der Ansprüche 12 bis 15, dadurch gekennzeichnet, daß der Formkern ein länglicher Körper ist, der entsprechend formgebend gebogen wird.

17. Verfahren nach einem der Ansprüche 12 bis 16, dadurch gekennzeichnet, daß die Form mit dem Kunststoff im Druckverfahren ausgegossen wird.

Fig. 1

Fig. 2

Fig. 3

**Europäisches Patentamt**

# EUROPÄISCHER RECHERCHENBERICHT

Nummer der Anmeldung

EP 90 12 1261

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 268 011 (NEFF GEWINDESPINDELN GmbH)<br>* Spalte 8, Zeile 1 - Spalte 9, Zeile 8; Figuren 2-5,7,11-13 * | 1-3,5 | F 16 C 29/06 |
| D,A | | 6,7,9, 10 | |
| Y | EP-A-0 164 540 (TSUBAKIMOTO PRECISION PRODUCTS CO., LTD)<br>* Seite 2, 2. Absatz; Seite 3, 2. Absatz; Seite 5, Zeile 22 - Seite 6, Zeile 9; Figur 1; seite 6, Zeile 22 - Seite 7, Zeile 4 * | 1-3,5 | |
| A | | 8 | |
| A | DE-A-3 422 444 (S.K.F. GmbH)<br>* Anspruch 1; Seite 9, Zeile 21 - Seite 10, Zeile 14; Seite 11, Zeilen 7-20; Figuren 1,2,4 * | 1-3,12 | |
| A | US-A-4 799 806 (SEKI)<br>* Figuren 8-13 * | 1-3,5,8 | RECHERCHIERTE SACHGEBIETE (Int. Cl.5) |
| A | PATENT ABSTRACTS OF JAPAN, Band 9, Nr. 103 (M-377)[1826], 8. Mai 1985; & JP-A-59 226 713 (TERAMACHI) 19-12-1984 | 1 | F 16 C<br>B 23 Q |
| A | FR-A-2 522 749 (S.K.F. GmbH)<br>* Seite 5, Zeile 38 - Seite 6, Zeile 25; Seite 6, Zeile 37 - Seite 7, Zeile 11; Anspruch 1; figur 3 * | 1-3,12 | |
| A | GB-A-2 089 443 (TERAMACHI)<br>* Figuren 3,4,6; Seite 3, Zeilen 46-59 * | 1-3,5,8 | |

Der vorliegende Recherchenbericht wurde für alle Patentansprüche erstellt

| Recherchenort | Abschlußdatum der Recherche | Prüfer |
|---|---|---|
| DEN HAAG | 29-05-1991 | GUTHMULLER J.A.H. |